# EUROPEAN PATENT SPECIFICATION

(11) **EP 3 732 077 B1**
(45) Date of publication and mention of the grant of the patent: **08.06.2022**
(21) Application number: 18826396.6
(22) Date of filing: 24.12.2018
(51) Int. Cl.: B60N 3/12

(54) **A HOLDER FOR HOLDING AN AEROSOL-GENERATING DEVICE AND A PACKET OF AEROSOL-GENERATING ARTICLES**
HALTER ZUR AUFNAHME EINER AEROSOLERZEUGENDEN VORRICHTUNG UND EINES PAKETS VON AEROSOLERZEUGENDEN ARTIKELN
SUPPORT POUR OBJET GÉNÉRANT UN AEROSOL ET POUR PAQUET D'ARTICLES GÉNÉRANT UN AEROSOL

(30) Priority: 28.12.2017 EP 17210856
(43) Date of publication of application: 04.11.2020
(73) Proprietor: Philip Morris Products S.A., 2000 Neuchâtel (CH)
(72) Inventor: TUNG, Jeffrey, San Francisco, California 94123 (US)
(74) Representative: Nevett, Duncan
(86) International application number: PCT/EP2018/086844
(87) International publication number: WO 2019/129764

(56) References cited:
- WO-A1-2017/213290
- CN-A- 103 844 356
- CN-U- 204 483 013
- JP-A- H10 281 467
- JP-A- H11 141 875
- JP-U- H0 263 695
- JP-U- S53 122 265
- JP-U- S62 107 254
- JP-Y1- S4 124 296
- KR-U- 20160 004 039
- KR-Y1- 200 176 276
- US-A- 3 986 649
- US-A1- 2013 200 124
- US-S- D 750 612

## Description

The present invention relates to a holder for use with consumer articles. In particular, the invention relates to holders that may simultaneously hold two consumer articles even when the articles are different consumer articles.

Holders for holding consumer articles are known in the art. Such devices typically hold or contain a single consumer article. The holder may be intended to protect the consumer article and prevent it being damaged. The holder may be intended to hold the consumer article in a specific position or location to improve ease of access.

In relation to consumer articles such as aerosol-generating articles, it is often necessary for a consumer to carry multiple items at one time. When using conventional cigarettes, a lighter or box of matches is also necessary. For self-assembled or 'roll your own' cigarettes, the tobacco, paper and filters are all required in order to assemble a cigarette. In modern smoking articles in which aerosol-generating devices are used to heat but not burn tobacco rods, both the disposable rods and the device itself may be required. For e-cigarettes and other vaping devices, replacement cartridges or containers of replacement liquid may be necessary as well as the device itself. Many of the disposable elements that are required in the sorts of articles discussed above are not suitable for disposal in all places. A consumer often has to retain used disposable elements until they can be conveniently disposed of, which may prevent further use of the related articles.

US 3986649 A provides a storage bin for loose articles of various sizes adapted to be mounted on a vehicle seat or other substantially upright support. The storage bin supports flat or elongated articles, such as magazines in a passage in the storage bin, and other articles can be stored within compartments in the storage bin.

KR 2016 0004039 U provides a cigarette holder provided with a main body formed to surround a part of each surface except the lid of the cigarette holder, a cigarette pack storage space formed in the main body for accommodating the cigarette pack, and a lighter.

It can be burdensome on the consumer to have to transport multiple items. If one is lost or damaged then it may prevent any of the articles being usable. Additionally, it may be difficult to keep all necessary articles conveniently to hand due to the variety in articles required. Finally, it may seem particularly burdensome to transport used disposable articles. Therefore, it would be desirable to provide a holder for holding two or more consumer articles simultaneously. Additionally, it would be desirable to provide a holder for holding two or more consumer articles simultaneously while also providing means for holding used articles.

The invention is defined in claims 1 and 8.

According to a first aspect of the invention there is provided a holder for holding an aerosol-generating device and a packet of aerosol-generating articles, the holder comprising a back wall and a support structure mounted on a front face of the back wall. The support structure comprises a first side wall projecting from the front face of the back wall, a second side wall projecting from the front face of the back wall, the second side wall positioned opposite the first side wall and a base wall projecting from the front face of the back wall, and positioned proximate the first side wall, wherein the base wall is configured to support one or more of the aerosol-generating device and the packet of aerosol-generating articles. The support structure further providing an intermediate wall projecting from the front face of the back wall, the intermediate wall positioned between the first and second side walls, wherein the intermediate wall is separated from the first side wall by a first predetermined distance such that the intermediate and first side walls are configured to hold the aerosol-generating device by interference fit, and the intermediate wall is separated from the second side wall by a second predetermined distance such that the intermediate and second side walls are configured to hold the packet of aerosol-generating articles by interference fit.

The first side wall comprises a back edge adjacent to the back wall and a front edge opposite the back edge, the first side wall further comprising a projection, the projection positioned adjacent the front edge of the first side wall and directed towards the intermediate wall, the projection configured to retain the aerosol-generating device between the first side wall and intermediate wall.

The projection of the first side wall is elongate and extends parallel to the front edge of the first side wall.

As used herein, "consumer article" relates to an article that may be used by a consumer in any one of a manner of ways. The article may be a single use article that must be disposed of after use. The article may be reusable, and the consumer may wish to be able to replace or store the article in a holder between uses. Examples of consumer articles, such as aerosol-generating articles and aerosol-generating devices are given below. The term consumer articles may also refer to packages or containers of any of the articles discussed above.

As used herein, the term "aerosol-generating article" refers to an article comprising an aerosol-forming substrate that is capable of releasing volatile compounds that can form an aerosol. The aerosol-forming substrate may release volatile compounds when heated. The aerosol-generating article may be a cigarette and the aerosol-forming substrate may comprise a tobacco rod. The aerosol-generating article may be designed to be heated within an aerosol-generating device, for example with an electrical heater.

As used herein, the term "aerosol-forming substrate" relates to a substrate capable of releasing volatile compounds that can form an aerosol. The volatile compounds may be released by heating the aerosol-forming substrate. The aerosol-forming substrate may be may be adsorbed, coated, impregnated or otherwise loaded onto a carrier or support. A suitable aerosol-forming substrate may comprise nicotine, a plant-based material, a homogenised plant-based material, at least one aerosol-former or other additives or ingredients, such as flavourants. A suitable substrate is preferably in liquid form.

As used herein, "aerosol-generating device" relates to a device that interacts with aerosol-forming substrate of an aerosol-generating article to generate an aerosol. An aerosol-generating device may comprise one or more components used to supply energy from a power supply to an aerosol-forming substrate of an aerosol-generating article to generate an aerosol that is inhalable by a user. An aerosol-generating device may comprise a power supply which may be an external power supply or an on-board power supply forming part of the aerosol-generating device. An aerosol-generating device may interact with an aerosol-forming substrate or an aerosol-generating article to generate an aerosol that is directly inhalable by a user.

As used herein, the terms "top", "bottom", "side", "front", "back", "lower" and "upper" refer to the relative positions of portions of holders according to the invention and components thereof when the holder is in an upright position as shown in the example embodiments in the accompanying figures. When describing holders according to the present invention, these terms are used irrespective of the orientation of the holder being described.

The present invention, which is defined in claims 1 and 8, provides a holder having a support structure that defines a first region for holding a first consumer article and a second region for holding a second consumer article. The two consumer articles may be held one on each side of the intermediate wall. In this arrangement the two consumer articles may be held close to one another. This may facilitate easy access by a user to both consumer articles. A user may not need to spend time and effort locating one consumer article and then the other consumer article.

The consumer articles are allowed to be held between two opposing side walls by an interference fit. The friction created between the consumer article and the side walls each side of it may prevent the consumer article from falling or being accidentally removed from the holder. The advantage of using an interference fit is that there are not complex or moving parts that are required to either insert into or remove a consumer article from the holder. A consumer article may be slid into the holder of the present invention. A consumer article may be slid between the opposing side walls from one end of the channel defined by the walls. Alternatively, a consumer article may be slid between the opposing side walls from the front edge opposing the back wall. Depending on the positioning of the present invention in use, a user may slide a consumer article into the holder from whichever direction is most convenient.

The base wall may provide additional support to a consumer article. A consumer article within the holder may be seated on the base wall. This is particularly advantageous for heavier consumer articles that may not be firmly held by interference fit alone, or for consumer articles with outer surface texture that does not allow for a strong interference fit.

The first side wall, the second side wall and the intermediate wall may extend substantially perpendicularly to the back wall, in a forwards direction. Alternatively, one or more of the first side wall, the second side wall and the intermediate wall may extend at a non-perpendicular angle to the back wall. For example, one or more of the walls may be inclined towards each other in order to improve the retention of the consumer articles within the holder.

The projection may be separated from the back wall by a distance equal to a dimension of a first consumer article. The projection may prevent a consumer article held within the holder from falling away from the back wall. The projection may extend over halfway across a face of the consumer article. Alternatively, the projection may extend less than halfway across a face of the consumer article. The projection may allow a consumer article to be inserted into the holder by passing the projection such that there is a snap-fit connection between the consumer article and the holder.

An elongate projection may extend substantially along the full length of the first side wall. Alternatively, an elongate projection may extend less than halfway along the length of the first side wall. Alternatively, the projection may be a round or circular projection.

Preferably, the first side wall and the base wall of the support structure are connected at a corner of the back wall such that the first side wall and the base wall together form a seat for the first consumer article. The first side wall and base wall may form a right angled corner. Alternatively, the first side wall and base wall may form a curved corner. The curve of the corner between the first side wall and the base wall may conform to a corner of a consumer article to be received in the holder.

According to the invention, the first consumer article is an aerosol-generating device and the second consumer article is a packet of aerosol-generating articles, wherein the aerosol-generating articles will typically be intended for use with the aerosol-generating device. An aerosol-generating device requires some form of aerosol-forming substrate to act on to generate the aerosol. Preferably, the aerosol-generating device includes a form of heater to heat aerosol-generating articles of aerosol-forming substrate. Such aerosol-forming articles are typically single use articles. Therefore, a packet of such aerosol-forming articles may be required to accompany an aerosol-generating device if a user wishes to use the device more than once in an outing. It may be convenient for a user to store or hold the packet of aerosol-forming articles in the same position as the aerosol-forming device when not using the device. In this way the packet of aerosol-forming articles and the aerosol-forming device may be less likely to be separated.

Preferably, the first predetermined distance is such that the holder is adapted to hold an aerosol-generating device with the widest side of the aerosol-generating device adjacent the back wall. The aerosol-generating device may be held with one face of the aerosol-generating device abutting the back wall of the holder. The aerosol-generating device may be held with opposing side faces of the aerosol-generating device abutting the first side wall and intermediate wall of the holder respectively. In this arrangement, the aerosol-generating device may be held flush against the back wall of the holder, extending as little as possible from the holder, in order to minimise the risk of the aerosol-generating device being knocked from the holder.

Alternatively, the first predetermined distance is such that the holder is adapted to hold an aerosol-generating device with the narrowest side of the aerosol-generating article adjacent the back wall. In this arrangement, the first predetermined distance may be minimised, and the overall width of the holder may be minimised.

Preferably, the holder further comprises an attachment mechanism on a back face of the back wall, the back face opposite the front face on which the support structure is mounted. An attachment mechanism may allow the holder to be attached to a structure or surface in order to position the holder in a location convenient for use. The attachment mechanism may allow the holder to be attached to a bag or carrier so that the holder can be transported by a user. The attachment mechanism may allow the holder to be attached to a surface or table top so that the holder can be easily accessed by a user and the holder can be prevented from moving on the surface or table top. The attachment mechanism may allow the holder to be attached inside or outside of a pocket of a garment so that a user can carry the holder on their person.

Preferably, the attachment mechanism comprises at least two projections defining a groove therebetween, the groove configured to receive a part of an air vent of a car. Preferably, the at least two projections are substantially parallel to each other. It may be particularly useful to provide a holder in a car or similar vehicle that allows a user to access consumer articles with ease because the user's attention may be focussed on driving or operating the car or vehicle. It may be particularly useful to provide a holder in a car or vehicle that can be accessed single-handedly as a user may be required to retain one hand on the steering wheel of the car or vehicle.

The use of a groove may allow the holder to be slid on and off the flaps of an air vent in a car of vehicle. The attachment means may retain the holder on the air vent by interference fit with the flap of the air vent. An air vent is typically within easy reach of a driver of a car or vehicle. Therefore, locating the holder on the air vent may allow the holder to also be within easy reach of a driver. The holder may be removed by a user when the user exits the vehicle.

Alternatively, the attachment mechanism may be a clamp configured to attach to the air vent of a car. Alternatively, the attachment mechanism may be a clip configured to attach to the air vent of a car. Alternatively, or in addition, the attachment mechanism may include a magnet configured to attach the holder to a metal portion of a car or vehicle dashboard, or to a complimentary magnet attached to a car or vehicle dashboard. Alternatively, the attachment mechanism may include a sucker portion configured to attach the holder to a car or vehicle dashboard by suction.

According to a second aspect of the present invention, there is provided a holder for holding an aerosol-generating device and a packet of aerosol-generating articles comprising a back wall, a support structure mounted on a first face of the back wall, and a receptacle mounted on a second face of the back wall, wherein the first face is opposite the second face. The support structure comprises a first side wall projecting from the first face of the back wall, and a second side wall projecting from the first face of the back wall, wherein the second side wall is positioned opposite the first side wall and is separated from the first side wall by a predetermined distance such that the first and second side walls are configured to hold the aerosol-generating device and the packet of aerosol-generating articles by interference fit. The first side wall projects further from the back wall than the second side wall projects from the back wall. The receptacle defines one or more compartments.

The use of interference fit to retain consumer articles provides a holder that is easy for a user to access from multiple directions or positions. Consumer articles can be slid between the opposing walls from any direction and retained between the walls. Additionally, retaining two consumer articles together between opposing side walls ensures that the two articles are retained together. This may ensure that the consumer articles can both be accessed at the same time in order to be used together.

The first side wall and the second side wall may extend substantially perpendicularly to the back wall, in a forwards direction. Alternatively, the first side wall and the second side wall may extend at a non-perpendicular angle to the back wall. For example, the first side wall and the second side wall may be inclined towards each other in order to improve the retention of the consumer articles within the holder.

The receptacle may provide a means for storing waste generated by either of the held consumer articles. This may prevent a user having to store waste on their person until a suitable time or place is found to dispose of the waste. Having the receptacle on the same holder as the consumer articles may keep all elements associated with the consumer articles in a single place. This may minimise mess and waste and may facilitate easy use.

Preferably, the receptacle comprises a main body having a closed bottom end and an open top end. The main body may be formed from side walls extending from the back side of the back wall, and a back wall. The closed bottom end may extend between the back side of the back wall and the side walls and back wall of the main body. The back side of the back wall and the side walls and back wall of the main body may define the open top end at an end of the walls distal to the closed bottom end. The receptacle may act as a container to receive waste consumer articles until they can be safely disposed of. Waste consumer articles may be used aerosol-generating articles. Waste consumer articles may be inserted through the open top end and retained by the main body and closed bottom end of the receptacle.

The receptacle may comprise a lid configured to cover the open top end. The lid may be a hinged lid. The lid may be openable inwardly. The lid may be biased in a closed position in which the lid covers the open top end of the receptacle. The lid may be openable by applying a force on the lid towards the inside of the receptacle. The lid may prevent waste consumer articles escaping the receptacle after being inserted. The lid may prevent odours from waste consumer articles escaping the receptacle.

Alternatively, the receptacle may comprise a cover over the open top end. The cover may be fixedly connected to the open top end of the receptacle. The cover may include a region of resiliently deformable material, the region of resiliently deformable material including at least one slit extending through the resiliently deformable material. A waste consumer article can be pushed through the at least one slit, forcing the material of the cover downwards such that the waste consumer article can be inserted into the receptacle. The material of the cover may be able to return to its original position after a consumer article is inserted through the slits into the receptacle. The cover may prevent waste consumer articles escaping the receptacle after being inserted. The cover may prevent odours from waste consumer articles escaping the receptacle.

The at least one slit may comprise any suitable number of slits. The at least one slit may be a single slit. The at least one slit may comprise two, three, four, or more slits. The at least one slit may comprise two slits extending through the resiliently deformable material, the two slits overlapping perpendicular to each other. The two slits may form a cross shape.

Preferably, the receptacle comprises an aperture in the bottom end and a flap configured to cover the aperture. The aperture may allow waste consumer articles to be emptied from the receptacle. Waste consumer articles may be dropped from the receptacle via gravity through the aperture. The flap may be positionable in a first closed position and a second open position. In the closed position, the flap may prevent the contents of the receptacle from escaping through the aperture. In the open position, the contents of the receptacle may be able to pass through the aperture and exit the receptacle. The flap may include a locking means configured to retain the flap in the closed position.

An aerosol-generating device may be held adjacent to the first, longer, side wall. A packet of aerosol-generating articles may be held adjacent to the second, shorter, side wall. A longer first side wall may extend from the back wall the same distance that an aerosol-generating device held in the holder extends from the back wall, such that the first side wall abuts the aerosol-generating device along the full width or depth of the aerosol-generating device, depending on the orientation of the aerosol-generating device in the holder. Maximising the connection between the first side wall and the aerosol-generating device may maximise the retaining force imparted by the first side wall and the aerosol-generating device. The second side wall may extend from the back wall a distance equal to only half the height of the packet of aerosol-generating articles when the packet of aerosol-generating articles is orientated such that the base of the packet is adjacent to the back wall of the holder. The second side wall may terminate at a predetermined extent such that the second side wall does not cover the lid of the packet of aerosol-generating articles. In this arrangement, a user is able to open and close the lid of the packet of aerosol-generating articles to remove an aerosol-generating article without removing the packet from the holder. The shorter second side wall may also prevent the second side wall catching or otherwise interfering with a bottom edge of the lid of the packet of aerosol-generating articles when the packet is inserted into the holder.

Holders according to the present invention may be formed of any suitable material or combination of materials. Preferably, holders according to the present invention are formed of a moulded plastic material.

Particular embodiments will now be discussed in detail and shown by way of example only in the following Figures, in which:
Figure 1 shows a perspective view of a holder according to a first aspect of the present invention;
Figures 2a and 2b show perspective views of the holder of Figure 1, holding one and two consumer articles respectively;
Figure 3 is a side view of the holder of Figure 1;
Figure 4 is a perspective view of the holder of Figure 1;
Figure 5 is a perspective view of a holder according to a second aspect of the present invention;
Figure 6 is a perspective view of the holder of Figure 5 with consumer articles;
Figure 7 is a perspective view of the holder of Figure 5 with a first article insertion configuration;
Figure 8 is a perspective view of the holder of Figure 5 with a second article insertion configuration;
Figure 9a is a perspective view of the holder of Figure 8 ejecting consumer articles, and Figure 9b is a perspective view of the holder of Figure 7 ejecting consumer articles.

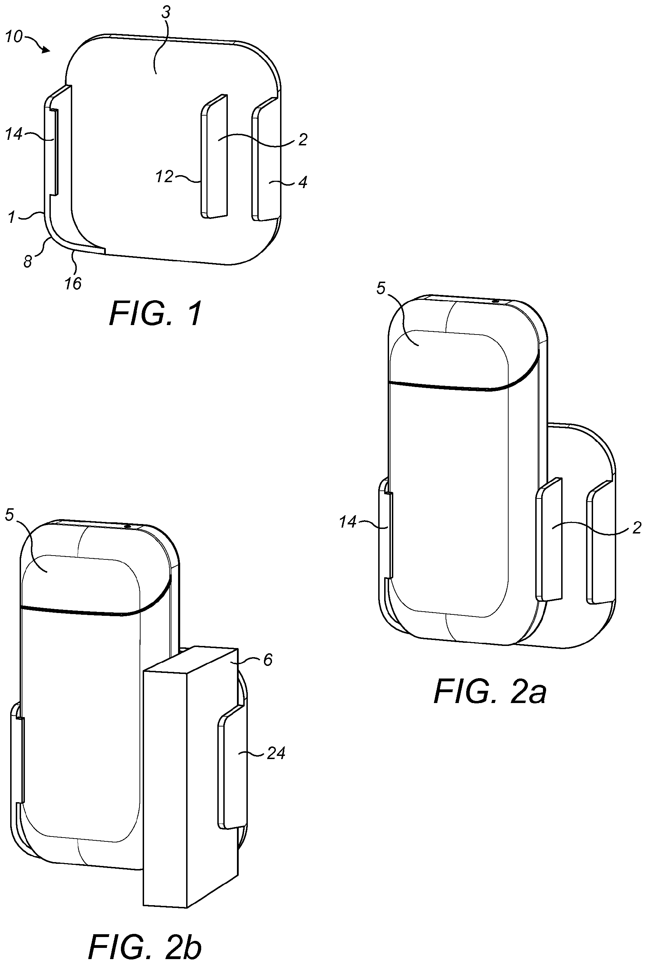

Figure 1 shows a schematic representation of a holder according to a first aspect of the present invention. The holder 10 is formed of a back wall 3, a first side wall 1, an intermediate wall 2, a second side wall 4 and a base wall 16. Each of the first side wall 1, the intermediate side wall 2, the second side wall 4 and the base wall 16 extend perpendicularly forwards from a front face 12 of the back wall 3. The base wall 16 is connected to the first side wall 1 at a rounded corner 8. The base wall 16 extends perpendicular to the first side wall 1.

The first side wall 1, second side wall 4 and intermediate wall 2 are positioned parallel to each other, with each wall extending substantially vertically. The first side wall 1 is positioned along one edge of the back wall 3. The second side wall 4 is positioned along an edge of the back wall 3 opposite the first side wall. The base wall 16 is positioned along an edge of the back wall 3 that extends between the first side wall 1 and the second side wall 4.

The first side wall 1, intermediate wall 2 and base wall 16 together with the back wall 3 define a first holding region. The second side wall 4 and intermediate wall 2 together with the back wall 3 define a second holding region. The first side wall 1 includes a lip 14 extending along an inner face of the front edge of the first side wall 1 and projecting towards the intermediate wall 2.

Figure 2a shows a perspective view of an aerosol-generating device 5 held within the first holding region of the holder 10. The aerosol-generating device 5 abuts each of the first side wall 1, intermediate wall 2 and the base wall 16 as well as the back wall 3 in order to be retained on the holder 10 by interference fit. Additionally, the aerosol-generating device 5 is positioned between the lip 14 and the back wall 3. The lip 14 prevents the aerosol-generating device 5 from falling forwards out of the holder 10.

Figure 2b shows a packet of aerosol-generating articles 6 held within the second holding region of the holder 10. The packet of aerosol-generating devices 6 abuts each of the second side wall 4 and the intermediate side wall 2 in order to be retained on the holder 10 by interference fit.

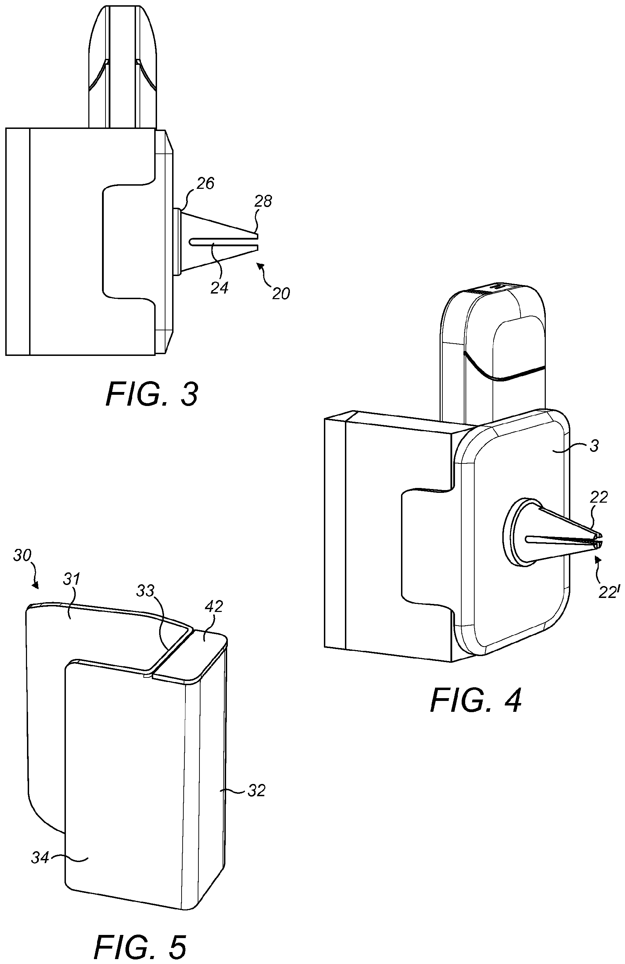

Figure 3 shows a side view of the holder 10 including an aerosol-generating device 5 and a packet of aerosol-generating articles 6. Extending from a back face 18 of the back wall 3 is an attachment mechanism 20. The attachment mechanism 20 extends perpendicularly outwards from the back face 18 back wall 3. The attachment mechanism 20 is formed of two parallel projections 22 and 22' defining a groove 24 between the two projections 22 and 22'. The two projections 22 and 22' are joined at the base 26 of the attachment mechanism 20. The base 26 of the attachment mechanism 20 has a large surface area. The base 26 of the attachment mechanism 20 connects to the back face 18 back wall 3 of the holder 10, as shown in Figure 4. Each of the two projections 22 and 22' taper away from the base 26 such that the projections are narrow at the tips 28.

The attachment mechanism 20 is configured to attach to the air vents of vehicles in particular. A flap of an air vent can be received in the groove 24 in order to position the holder 10 on the dashboard of a vehicle.

Figure 5 shows a holder 30 according to a second aspect of the present invention. The holder 30 is formed of a back wall 33, a first side wall 31, a second side wall 34 and a receptacle 32. The first side wall 31 and the second side wall 34 extend perpendicularly from a first face of the back wall 33. The first side wall 31 and the second side wall 34 are positioned parallel to each other, with each side wall extending substantially vertically. The first side wall 31 is positioned along one edge of the back wall 33. The second side wall 34 is positioned along an edge of the back wall 33 opposite the first side wall.

The receptacle 32 is positioned on a second face of the back wall 33, opposite the first face. The receptacle 32 extends across the whole of the second face of the back wall 33. The receptacle 32 is defined by two opposing side walls 35, a back wall 36, a top cover 39 and a bottom wall 40.

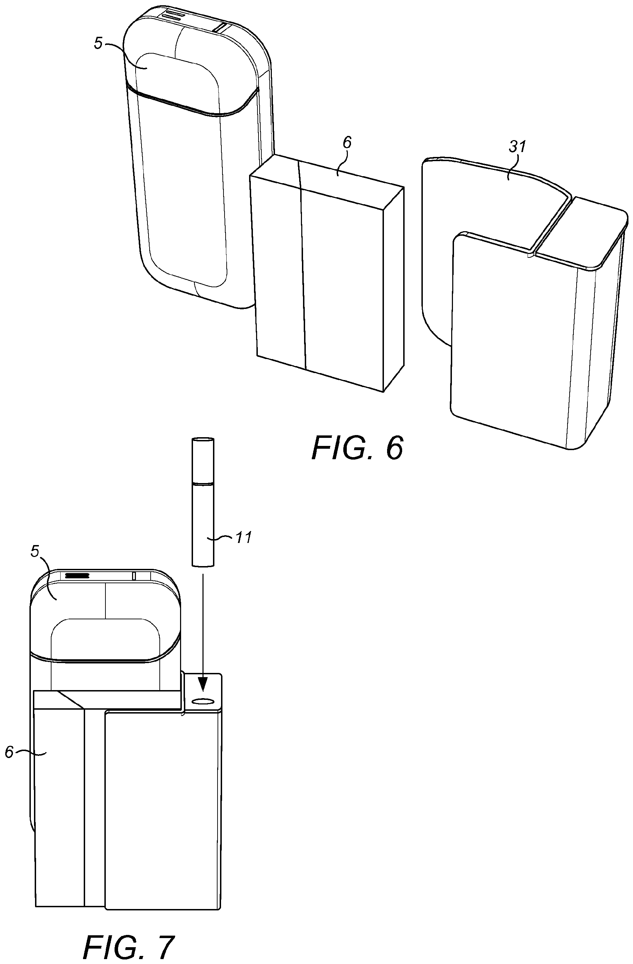

As shown in Figure 6, an aerosol-generating device 5 and a packet of aerosol-generating articles 6 are inserted into the holder by sliding from the distal edge of the first side wall 31 to the back wall 33. The aerosol-generating device 5 and packet of aerosol-generating articles 6 are then held simultaneously between the first side wall 31 and the second side wall 34. The width of the aerosol-generating device 5 and the packet of aerosol-generating articles 6 together is substantially equal to the distance between the first side wall 31 and the second side wall 34, such that the aerosol-generating device 5 and the packet of aerosol-generating articles 6 are held in position via interference fit.

An opening 42 is located within the top cover 39 of the receptacle 32. The opening 42 is defined by two slits extending through the top cover 39. The slits overlie each other and one slit is perpendicular to the other slit such that the two slits together form a cross. The top cover 39 surrounding the cross is formed of a resiliently deformable material. With this construction, a waste item, such as a used aerosol-generating article, may be pushed through the opening 42, as shown in Figure 7, deforming the material either side of the slits, in order to enter the receptacle 32. Once the article is inserted, the material either side of the slits will return to its original position such that the waste and any odours generated by it are prevented from escaping from the receptacle 32.

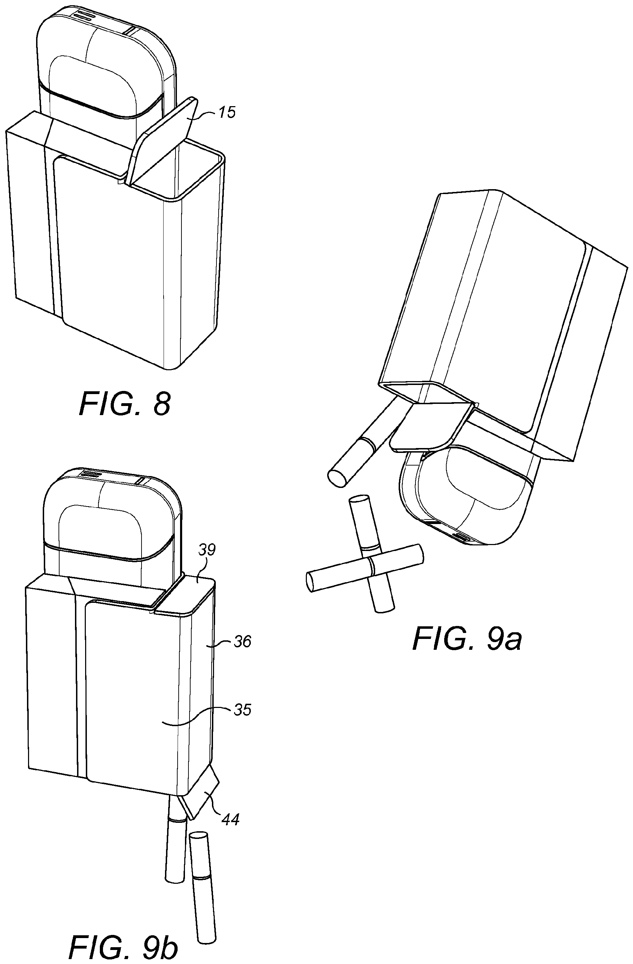

In an alternative embodiment, as shown in Figure 8, the top cover 39 may be hingedly connected to the second face of the back wall 33. The top cover 39 in this embodiment may be opened by a user to allow waste consumer articles to be inserted into the receptacle 32. In order to empty the contents of the receptacle 32, the top cover 39 may be opened and the holder 30 tipped in order that the consumer articles within the receptacle 32 can fall out, as shown in Figure 9a.

In the first embodiment, in which the top cover 39 is fixedly attached to the main body of the receptacle 32, the bottom wall 40 includes an aperture 46 to allow the contents of the receptacle 32 to be removed. Waste aerosol-generating articles can be ejected through the aperture 46 at a convenient time. The aperture 46 is covered by a hinged lid 44 as shown in Figures 9a and 9b. The hinged lid 44 has a locking means to retain the hinged lid 44 in a closed position such that it covers the aperture 42. A user may activate the locking means in order to open the hinged lid 44 such that waste can be emptied from the receptacle 32.

## Claims

1. A holder (30) for holding an aerosol-generating device (5) and a packet of aerosol-generating articles (6), the holder (30) comprising;
a back wall (33), a support structure mounted on a first face of the back wall (33), and a receptacle (32) mounted on a second face of the back wall (33), wherein the first face is opposite the second face;
the support structure comprising
a first side wall (31) projecting from the first face of the back wall (33);
a second side wall (34) projecting from the first face of the back wall (33), wherein the second side wall (34) is positioned opposite the first side wall (31) and is separated from the first side wall (31) by a predetermined distance such that the first and second side walls (31, 34) are configured to hold the aerosol-generating device (5) and the packet of aerosol-generating articles (6) by interference fit, and wherein the first side wall (31) projects further from the back wall (33) than the second side wall (34) projects from the back wall (33); and
the receptacle (32) defining one or more compartments.

2. The holder (30) of claim 1, wherein the receptacle (32) comprises a main body having a closed bottom end and an open top end.

3. The holder (30) of claim 2, wherein the receptacle (32) comprises a lid (39) configured to cover the open top end.

4. The holder (30) of claim 3, wherein the lid (39) is a hinged lid.

5. The holder (30) of claim 2, wherein the receptacle (32) comprises a cover (39) over the open top end, and the cover (39) includes a region of resiliently deformable material, the region of resiliently deformable material including at least one slit extending through the resiliently deformable material.

6. The holder (30) of claim 5, wherein the at least one slit comprises two slits extending through the resiliently deformable material, the two slits overlying each other to define a cross shape.

7. The holder (30) of any of claims 2 to 6, wherein the receptacle (32) comprises an aperture (46) in the bottom end and a flap (44) configured to cover the aperture (46).

8. A holder (10) for holding an aerosol-generating device (5) and a packet of aerosol-generating articles (6), the holder (10) comprising;
a back wall (3) and a support structure mounted on a front face of the back wall (3);
the support structure comprising;
a first side wall (1) projecting from the front face of the back wall (3);
a second side wall (4) projecting from the front face of the back wall (3), the second side wall (4) positioned opposite the first side wall (1);
a base wall (16) projecting from the front face of the back wall (3), and positioned proximate the first side wall (1), wherein the base wall (16) is configured to support one or more of the aerosol-generating device (5) and the packet of aerosol-generating articles (6); and
an intermediate wall (2) projecting from the front face of the back wall (3), the intermediate wall (2) positioned between the first and second side walls (1, 4), wherein the intermediate wall (2) is separated from the first side wall (1) by a first predetermined distance such that the intermediate and first side walls (1, 2) are configured to hold the aerosol-generating device (5) by interference fit, and the intermediate wall (2) is separated from the second side wall (4) by a second predetermined distance such that the intermediate and second side walls (2, 4) are configured to hold the packet of aerosol-generating articles (6) by interference fit, wherein the first side wall (1) comprises a back edge adjacent to the back wall (3) and a front edge opposite the back edge, the first side wall (1) further comprising a projection, the projection positioned adjacent the front edge of the first side wall (1) and directed towards the intermediate wall (2), the projection configured to retain the aerosol-generating device (5) between the first side wall (1) and intermediate wall (2), wherein the projection of the first side wall (1) is elongate and extends parallel to the front edge of the first side wall (1).

9. The holder (10) of claim 8, wherein the first side wall (1) and the base wall (16) of the support structure are connected at a corner (8) of the back wall (3) such that the first side wall (1) and the base wall (3) together form a seat for the aerosol-generating device (5).

10. The holder (10) of claim 8 or 9, wherein the first predetermined distance is such that the holder (10) is adapted to hold the aerosol-generating device (5) with the widest side of the aerosol-generating device (5) adjacent the back wall (3).

11. The holder (10) of claim 8 or 9, wherein the first predetermined distance is such that the holder (10) is adapted to hold the aerosol-generating device (5) with the narrowest side of the aerosol-generating article (6) adjacent the back wall (30).

12. The holder (10) of any of claims 8 to 11, further comprising an attachment mechanism (20) on a back face (18) of the back wall (3), the back face (18) opposite the front face.

## Patentansprüche

1. Haltevorrichtung (30) zur Aufnahme von einer Aerosolerzeugungsvorrichtung (5) und einer Packung aerosolerzeugender Artikel (6), die Haltevorrichtung (30) umfassend:
eine Rückwand (33), eine an einer ersten Seite der Rückwand (33) angebrachte Stützstruktur, und eine an einer zweiten Seite der Rückwand (33) angebrachte Aufnahme (32), wobei die erste Seite der zweiten Seite gegenüberliegt;
die Stützstruktur umfassend
eine erste, von der ersten Seite der Rückwand (33) vorstehende Seitenwand (31);
eine zweite, von der ersten Seite der Rückwand (33) vorstehende Seitenwand (34), wobei die zweite Seitenwand (34) gegenüber der ersten Seitenwand (31) positioniert ist und von der ersten Seitenwand (31) durch eine vorbestimmte Distanz getrennt ist, sodass die erste und die zweite Seitenwand (31, 34) zur Aufnahme der Aerosolerzeugungsvorrichtung (5) und der Packung aerosolerzeugender Artikel (6) durch Presspassung ausgelegt sind, und wobei die erste Seitenwand (31) weiter von der Rückwand (33) vorsteht als die zweite Seitenwand (34) von der Rückwand (33) vorsteht; und
wobei die Aufnahme (32) eine oder mehrere Kammern definiert.

2. Haltevorrichtung (30) nach Anspruch 1, wobei die Aufnahme (32) einen Hauptkörper mit einem geschlossenen unteren Ende und einem offenen oberen Ende umfasst.

3. Haltevorrichtung (30) nach Anspruch 2, wobei die Aufnahme (32) einen zur Abdeckung des offenen oberen Endes ausgelegten Deckel (39) umfasst.

4. Haltevorrichtung (30) nach Anspruch 3, wobei der Deckel (39) ein Scharnierdeckel ist.

5. Haltevorrichtung (30) nach Anspruch 2, wobei die Aufnahme (32) eine Abdeckung (39) über dem offenen oberen Ende umfasst und die Abdeckung (39) eine Region aus elastisch verformbarem Material beinhaltet, wobei die Region aus elastisch verformbarem Material wenigstens einen sich durch das elastisch verformbare Material erstreckenden Schlitz beinhaltet.

6. Haltevorrichtung (30) nach Anspruch 5, wobei der wenigstens eine Schlitz zwei sich durch das elastisch verformbare Material erstreckende Schlitze umfasst, wobei die zwei Schlitze zur Definition einer Kreuzform einander überlagern.

7. Haltevorrichtung (30) nach einem der Ansprüche 2 bis 6, wobei die Aufnahme (32) eine Öffnung (46) in dem unteren Ende und eine zur Abdeckung der Öffnung (46) ausgelegte Klappe (44) umfasst.

8. Haltevorrichtung (10) zur Aufnahme von einer Aerosolerzeugungsvorrichtung (5) und einer Packung aerosolerzeugender Artikel (6), die Haltevorrichtung (10) umfassend:
eine Rückwand (3) und eine an einer Vorderseite der Rückwand (3) angebrachte Stützstruktur;
die Stützstruktur umfassend:
eine erste, von der Vorderseite der Rückwand (3) vorstehende Seitenwand (1);
eine zweite, von der Vorderseite der Rückwand (3) vorstehende Seitenwand (4), wobei die zweite Seitenwand (4) gegenüber der ersten Seitenwand (1) positioniert ist;
eine von der Vorderseite der Rückwand (3) vorstehende und in der Nähe der ersten Seitenwand (1) positionierte Basiswand (16), wobei die Basiswand (16) zum Lagern einer oder mehrerer der Aerosolerzeugungsvorrichtungen (5) und der Packung aerosolerzeugender Artikel (6) ausgelegt ist; und
eine von der Vorderseite der Rückwand (3) vorstehende Zwischenwand (2), wobei die Zwischenwand (2) zwischen den ersten und zweiten Seitenwänden (1, 4) positioniert ist, wobei die Zwischenwand (2) von der ersten Seitenwand (1) durch eine erste vorbestimmte Distanz getrennt ist, sodass die Zwischen- und ersten Seitenwände (1, 2) zur Aufnahme von der Aerosolerzeugungsvorrichtung (5) durch Presspassung ausgelegt sind, und die Zwischenwand (2) von der zweiten Seitenwand (4) durch eine zweite vorbestimmte Distanz getrennt ist, sodass die Zwischen- und die zweiten Seitenwände (2, 4) zur Aufnahme von der Packung aerosolerzeugender Artikel (6) durch Presspassung ausgelegt sind, wobei die erste Seitenwand (1) eine Rückkante angrenzend an die Rückwand (3) und eine Vorderkante gegenüber der Rückkante umfasst, die erste Seitenwand (1) ferner einen Vorsprung umfasst, der Vorsprung angrenzend an die Vorderkante der ersten Seitenwand (1) positioniert und in Richtung der Zwischenwand (2) gerichtet ist, der Vorsprung zum Zurückhalten der Aerosolerzeugungsvorrichtung (5) zwischen der ersten Seitenwand (1) und der Zwischenwand (2) ausgelegt ist, wobei der Vorsprung der ersten Seitenwand (1) länglich ist und sich parallel zu der Vorderkante der ersten Seitenwand (1) erstreckt.

9. Haltevorrichtung (10) nach Anspruch 8, wobei die erste Seitenwand (1) und die Basiswand (16) der Stützstruktur an einer Ecke (8) der Rückwand (3) derart verbunden sind, dass die erste Seitenwand (1) und die Basiswand (3) zusammen einen Sitz für die Aerosolerzeugungsvorrichtung (5) bilden.

10. Haltevorrichtung (10) nach Anspruch 8 oder 9, wobei die erste vorbestimmte Distanz derart ist, dass die Haltevorrichtung (10) zur Aufnahme von der Aerosolerzeugungsvorrichtung (5) mit der breitesten Seite der Aerosolerzeugungsvorrichtung (5) angrenzend an die Rückwand (3) angepasst ist.

11. Haltevorrichtung (10) nach Anspruch 8 oder 9, wobei die erste vorbestimmte Distanz derart ist, dass die Haltevorrichtung (10) zur Aufnahme von der Aerosolerzeugungsvorrichtung (5) mit der schmalsten Seite des aerosolerzeugenden Artikels (6) angrenzend an die Rückwand (30) angepasst ist.

12. Haltevorrichtung (10) nach einem der Ansprüche 8 bis 11, ferner umfassend einen Befestigungsmechanismus (20) an einer Rückseite (18) der Rückwand (3), wobei die Rückseite (18) der Vorderseite gegenüberliegt.

## Revendications

1. Support (30) destiné à supporter un dispositif de génération d'aérosol (5) et un paquet d'articles de génération d'aérosol (6), le support (30) comprenant ;
une paroi arrière (33), une structure de soutien montée sur une première face de la paroi arrière (33), et un réceptacle (32) monté sur une seconde face de la paroi arrière (33), dans lequel la première face est opposée à la seconde face ;
la structure de soutien comprenant
une première paroi latérale (31) faisant saillie à partir de la première face de la paroi arrière (33) ;
une seconde paroi latérale (34) faisant saillie à partir de la première face de la paroi arrière (33), dans lequel la seconde paroi latérale (34) est positionnée à l'opposé de la première paroi latérale (31) et est séparée de la première paroi latérale (31) d'une distance prédéterminée de sorte que les première et seconde parois latérales (31, 34) sont configurées pour supporter le dispositif de génération d'aérosol (5) et le paquet d'articles de générations d'aérosol (6) par ajustement serré, et dans lequel la première paroi latérale (31) dépasse davantage de la paroi arrière (33) que la seconde paroi latérale (34) ne dépasse de la paroi arrière (33) ; et
le réceptacle (32) définissant un ou plusieurs compartiments.

2. Support (30) selon la revendication 1, dans lequel le réceptacle (32) comprend un corps principal ayant une extrémité inférieure fermée et une extrémité supérieure ouverte.

3. Support (30) selon la revendication 2, dans lequel le réceptacle (32) comprend un couvercle (39) configuré pour recouvrir l'extrémité supérieure ouverte.

4. Support (30) selon la revendication 3, dans lequel le couvercle (39) est un couvercle articulé.

5. Support (30) selon la revendication 2, dans lequel le réceptacle (32) comprend un couvercle (39) sur l'extrémité supérieure ouverte, et le couvercle (39) comporte une région de matériau élastiquement déformable, la région de matériau élastiquement déformable comportant au moins une fente s'étendant à travers le matériau élastiquement déformable.

6. Support (30) selon la revendication 5, dans lequel l'au moins une fente comprend deux fentes s'étendant à travers le matériau élastiquement déformable, les deux fentes se recouvrant l'une l'autre pour définir une forme en croix.

7. Support (30) selon l'une quelconque des revendications 2 à 6, dans lequel le réceptacle (32) comprend une ouverture (46) dans l'extrémité inférieure et un rabat (44) configuré pour recouvrir l'ouverture (46).

8. Support (10) destiné à supporter un dispositif de génération d'aérosol (5) et un paquet d'articles de génération d'aérosol (6), le support (10) comprenant ;
une paroi arrière (3) et une structure de soutien montée sur une face avant de la paroi arrière (3) ;
la structure de soutien comprenant ;
une première paroi latérale (1) faisant saillie à partir de la face avant de la paroi arrière (3) ;
une seconde paroi latérale (4) faisant saillie à partir de la face avant de la paroi arrière (3), la seconde paroi latérale (4) étant positionnée à l'opposé de la première paroi latérale (1) ;
une paroi de base (16) faisant saillie à partir de la face avant de la paroi arrière (3), et positionnée à proximité de la première paroi latérale (1), dans lequel la paroi de base (16) est configurée pour soutenir un ou plusieurs parmi le dispositif de génération d'aérosol (5) et le paquet d'articles de génération d'aérosol (6) ; et
une paroi intermédiaire (2) faisant saillie à partir de la face avant de la paroi arrière (3), la paroi intermédiaire (2) étant positionnée entre les première et seconde parois latérales (1, 4), dans lequel la paroi intermédiaire (2) est séparée de la première paroi latérale (1) d'une première distance prédéterminée de sorte que les parois latérales intermédiaire et première (1, 2) sont configurées pour supporter le dispositif de génération d'aérosol (5) par ajustement serré, et la paroi intermédiaire (2) est séparée de la seconde paroi latérale (4) d'une seconde distance prédéterminée de sorte que les parois latérales intermédiaire et seconde (2, 4) sont configurées pour supporter le paquet d'articles de générations d'aérosol (6) par ajustement serré, dans lequel la première paroi latérale (1) comprend un bord arrière adjacent à la paroi arrière (3) et un bord avant opposé au bord arrière, la première paroi latérale (1) comprenant en outre une saillie, la saillie étant positionnée adjacente au bord avant de la première paroi latérale (1) et dirigée vers la paroi intermédiaire (2), la saillie étant configurée pour retenir le dispositif de génération d'aérosol (5) entre la première paroi latérale (1) et la paroi intermédiaire (2), dans lequel la saillie de la première paroi latérale (1) est allongée et s'étend parallèlement au bord avant de la première paroi latérale (1).

9. Support (10) selon la revendication 8, dans lequel la première paroi latérale (1) et la paroi de base (16) de la structure de soutien sont reliées à un coin (8) de la paroi arrière (3) de sorte que la première paroi latérale (1) et la paroi de base (3) forment ensemble un siège pour le dispositif de génération d'aérosol (5).

10. Support (10) selon la revendication 8 ou 9, dans lequel la première distance prédéterminée est telle que le support (10) est adapté pour supporter le dispositif de génération d'aérosol (5) avec le côté le plus large du dispositif de génération d'aérosol (5) adjacent à la paroi arrière (3).

11. Support (10) selon la revendication 8 ou 9, dans lequel la première distance prédéterminée est telle que le support (10) est adapté pour supporter le dispositif de génération d'aérosol (5) avec le côté le plus étroit de l'article de génération d'aérosol (6) adjacent à la paroi arrière (30).

12. Support (10) selon l'une quelconque des revendications 8 à 11, comprenant en outre un mécanisme de fixation (20) sur une face arrière (18) de la paroi arrière (3), la face arrière (18) étant opposée à la face avant.
